# NEUE EUROPÄISCHE PATENTSCHRIFT

(11) **EP 1 938 963 B2**
(45) Veröffentlichungstag und Bekanntmachung des Hinweises auf die Entscheidung über den Einspruch: **02.09.2015**
(45) Hinweis auf die Patenterteilung: 10.02.2010
(21) Anmeldenummer: 07023872.0
(22) Anmeldetag: 10.12.2007
(51) Int. Cl.: B32B 3/02, B32B 3/06, E04F 15/10, F16B 5/00

(54) **Bodenpaneel**
Floor panel
Panneau de sol

(30) Priorität: 11.12.2006 DE 102006058655
(43) Veröffentlichungstag der Anmeldung: 02.07.2008
(73) Patentinhaber: Ulrich Windmöller Consulting GmbH, 33758 Schloss Holte-Stukenbrock (DE)
(72) Erfinder: Windmöller, Ulrich, 33758 Schloss Holte-Stukenbrock (DE)
(74) Vertreter: Valea AB

(56) Entgegenhaltungen:
- EP-A- 0 890 373
- WO-A-02/04206
- WO-A-2005/010297
- DE-U1- 20 021 677
- DE-U1- 29 724 876
- DE-U1- 29 908 733

## Beschreibung

Die Erfindung betrifft ein Bodenpaneel in der Form einer rechteckigen Kunststoffplatte gemäß dem Oberbegriff des Anspruchs 1.

Ein Bodenpaneel in der Form einer rechteckigen Kunststoffplatte mit einer Nut-Feder-Profilierung an wenigstens zwei einander gegenüberliegenden Rändern ist aus der GB 1,430,423 bekannt. Die verwendete Nut-Feder-Profilierung hat gegenüber einer üblichen Nut-Feder-Verbindung die Besonderheit, dass Nut und Feder miteinander verriegelt werden können, so dass ein Auseinanderdriften benachbarter Platten in der Verlegeebene verhindert werden kann. Eine Verbindung dieser Art soll im vorliegenden Zusammenhang als verriegelbare Nut-Feder-Verbindung bezeichnet werden.

Verriegelbare Nut-Feder-Verbindungen haben in letzter Zeit insbesondere im Zuge des Erfolges von sogenannten Laminat-Bodenpaneelen weite Verbreitung gefunden. Wegen der Möglichkeit des federnden Zusammenrastens benachbarter Paneele wird in der Praxis auch von Klick-Verbindungen gesprochen. Zu den bekanntesten einschlägigen Schutzrechten gehören die EP 843 763 A1, die EP 1 024 234 A1, die EP 1 036 341 A1 und die EP 698 126 A1.

Die bekannten Bodenpaneele bestehen zumeist aus einem Kern aus Holzspanmaterial, z.B. MDF oder HDF, das mit einer Dekorlage und einer Nutz- oder Verschleißschicht abgedeckt (laminiert) ist.

Die WO 02/04206 A1 offenbart ein Verfahren zur Herstellung von Bodenelementen, die eine obere Dekorfläche, eine untere Fläche. Kopplungsteile zum Aneinanderkoppeln und einen Kern aufweisen. Der Kern soll eine tragende Struktur aufweisen. Die tragende Struktur, die durch den Kern gebildet wird, ist offenbar eine harte bzw. feste Struktur. Wenn der Kern Kunststoff enthält oder aus Kunststoff besteht, soll es sich offenbar um duroplastische Materialien handeln.

Bei der DE 297 24 876 U1 handelt es sich um eine Fußbodenplatte mit einem festen Kern aus MDF oder HDF. also Spanplattenmaterial. Sofern das Material des Kerns Kunststoff enthält, ist davon auszugehen, dass es sich auch hier um feste Kunststoffmaterialien handelt.

Die in der Schrift DE 200 21 677 U1 beschriebene Paneelplatte soll "aus Holzwerkstoff oder Kunststoff" bestehen. Als Beispiel wird MDF oder HDF angegeben. Es handelt sich offenbar auch hier um eine harte, feste Platte.

Laminatböden haben sich als optisch ansprechendes, preisgünstiges und relativ leicht und auch durch Laien zu verlegendes Fussbodenmaterial erwiesen und entsprechend weite Verbreitung gefunden.

Wegen des hohen Anteils des Holzwerkstoffs in den Laminatpaneelen ist es bisher noch nicht möglich gewesen, den relativ hohen Trittschall, der von den Laminatböden ausgeht, nennenswert zu reduzieren.

Andererseits sind auch Kunststoff-Bodenbeläge bekannt, die zumeist überwiegend oder ganz aus PVC bestehen und in der Form einzelner Fliesen oder Paneele geliefert werden. Diese einzelnen Fliesen oder Paneele werden auf einem festen Untergrund verklebt. Diese Kunststoffbodenbeläge haben zwar Vorteile in Bezug auf die Trittschallübertragung, jedoch ist das Verlegen, das durch Verkleben der einzelnen Paneele auf dem Untergrund erfolgt, nach wie vor zeitraubend und arbeitsaufwendig. Da hierzu in der Regel Dispersionskleber verwendet werden, kann es aufgrund von Dampfdiffusion durch die Klebeschicht oder auch durch Feuchtigkeit aus dem Untergrund zu einer Blasenbildung im Bodenbelag kommen.

Der Erfindung liegt daher die Aufgabe zugrunde, ein Bodenpaneel der eingangs genannten Art zu schaffen, das unter Beibehaltung der günstigen Trittschalleigenschaften rasch, einfach und problemlos verlegt werden kann.

Eine Lösung dieser Aufgabe ermöglicht ein Bodenpaneel mit den Merkmalen des Anspruchs 1.

Ein erfindungsgemäßes Bodenpaneel weist die Form eines mehrschichtigen, rechteckigen Laminats auf, das einen weichen Kern aus PVC besitzt, auf dessen Oberseite sich eine Dekorfolie befindet. Auf der Dekorfolie ist eine transparente Verschleißschicht und auf dieser eine transparente Lackschicht angebracht. Auf der Rückseite befindet sich eine Gegenzugschicht. Wenigstens zwei einander gegenüberliegende Ränder sind mit einem verriegelbaren Nut-Feder-Profil ausgerüstet.

Ein erfindungsgemäßes Bodenpaneel kann verlegt werden wie die üblichen Fussbodenpaneele aus HDF oder MDF. Wegen seines relativ weichen Kerns aus PVC, weist das Material einen hohen Grad der Trittschalldämpfung auf.

Ein erfindungsgemäßes Bodenpaneel ist vollständig wasserfest und kann daher auch für Räume benutzt werden, die Wasser und anderen Flüssigkeiten und Feuchtigkeiten ausgesetzt sind. Eine Quellung des Materials nach Berührung mit einer Flüssigkeit unterbleibt.

Eine besondere Steigerung der Trittschalldämpfung läßt sich erreichen durch eine an der Rückseite der Paneele angebrachte Trittschallmatte.

Als Material für den Kern und die verschiedenen weiteren Schichten des erfindungsgemäßen Paneels wird PVC verwendet.

Die einzelnen Schichten werden in einem Thermokaschierungsverfahren miteinander verbunden. Lediglich die UV-gehärtete Lackschicht wird in einem gesonderten Arbeitsschritt nachträglich aufgebracht.

Ein erfindungsgemäßes Paneel sollte eine größere Dicke haben als die üblichen elastischen Bodenpaneele. Die Dicke sollte 4 bis 8 mm betragen. Das Gewicht sollte 1,5 bis 2,0 kg pro mm und pro m² betragen.

Eine Verbindung der Paneele mit einem verriegelbaren Nut-Feder-Profil hat den Vorteil, dass eine Fläche schwimmend verlegt werden kann. Feuchtigkeit unterhalb des Bodens kann zu den Seiten abgeleitet werden.

Besonders wesentlich ist, dass eine Verklebung der Paneele nicht notwendig ist. Das bisher übliche Verkleben war stets mit starker Verschmutzung des Materials und der Räumlichkeiten sowie des Personals verbunden. Der Kleber benötigte einige Zeit zum Trocknen. Die dabei entstehenden Ausdunstungen werden im allgemeinen als unangenehm empfunden. Diese Nachteile entfallen bei dem erfindungsgemäßen Verlegesystem ohne Verkleben.

Der Boden ist nach dem Verlegen sofort nutzbar. Bei Renovierungen werden die Stillstandzeiten erheblich reduziert.

Das Rohmaterial PVC hat die negative Eigenschaft, dass im Alterungsprozeß eine Wanderung der Weichmacher und damit eine Schrumpfung stattfindet. Bei herkömmlichen geklebten Verbindungen kann dies zur Fugenbildung führen. Da der erfindungsgemäl3e Boden schwimmend verlegt werden kann, kann die auftretende Schrumpfung durch die schwimmende Anordnung und die Verriegelung der Paneele ausgeglichen werden.

Ein erfindungsgemäßer Boden ist, ebenso wie die bisherigen Laminatböden, wieder aufnehmbar und wieder verwendbar. Dies führt zu einer Eignung für den Messe- und Ladenbau, für Präsentationsflächen in Verkaufsräumen, in Möbelhäusern etc.

Die erfindungsgemäßen Bodenpaneele können vor allem in verschiedenen Abmessungen üblicher Bodenplatten hergestellt werden, beispielsweise in Zehnerstaffelung von 30 x 30 cm bis 60 x 60 cm. Sie können auch als streifenförmige Gebilde von 90 bis 120 cm Länge und 7 bis 22 cm Breite angeboten werden.

Die erfindungsgemäßen Bodenpaneele entsprechen in ihrem Aufbau somit im wesentlichen den herkömmlichen Laminaten mit HDF- oder MDF-Kern, bestehen jedoch insgesamt aus Kunststoff. Ein Kunststoff-Laminat dieser Art hat eine Reihe von positiven Eigenschaften, die, insbesondere für bestimmte Einsatzzwecke, den möglicherweise etwas höheren Preis eindeutig aufwiegen.

Im folgenden werden bevorzugte Ausführungsbeispiele anhand der beigefügten Zeichnungen näher erläutert.
- Fig. 1: ist ein schematischer Teilschnitt zur Veranschaulichung des inneren Aufbaus eines erfindungsgemäßen Bodenpaneels;
- Fig. 2a - 2e: sind verschiedene schematische Teilschnittdarstellungen zur Erläuterung von verriegelbaren Randprofilen, die erfindungsgemäß verwendet werden können.

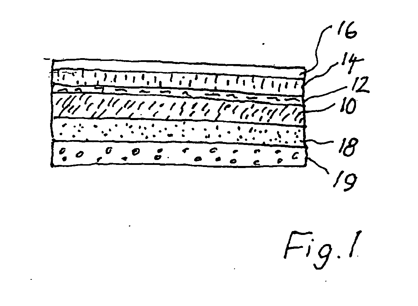

Zunächst soll auf Fig. 1 Bezug genommen werden. Ein erfindungsgemäßes Bodenpaneel weist im Zentrum einen Kern 10 aus einem relativ hoch gefüllten, noch elastischen Kunststoff, nämlich PVC auf. Auf dem Kern befindet sich eine Dekorschicht 12, nämlich ein bedruckter PVC-Film, der ein Dekor beliebiger Art, beispielsweise ein Holz- oder auch ein Steindekor oder auch ein beliebiges Phantasiedekor aufnehmen kann. Die Dekorschicht 12 wird abgedeckt durch eine Nutz- oder Verschleißschicht 14, die eine hohe Abriebfestigkeit aufweist. Schließlich befindet sich auf der Oberfläche ein UV-härtbarer Lack 16. Die Härtung durch UV-Licht hat den besonderen Vorteil, dass sich das Herstellungsverfahren beschleunigt. Auf der Rückseite befindet sich eine Gegenzugschicht 18, durch die verhindert wird, dass sich das Paneel bei Dehnung und Schrumpfung wölbt.

Auf der Unterseite des Paneels kann eine Dämpfungsschicht 19 vorgesehen sein, die zusätzlich zur Dämpfung von Tritt- und/oder Raumschall beiträgt. Die Schicht 18 der Fig. 1 kann zugleich die Funktion eines Gegenzuges ausüben als auch Dämpfungsschicht sein.

In dem Kern 10 können sich geeignete Füllstoffe befinden.

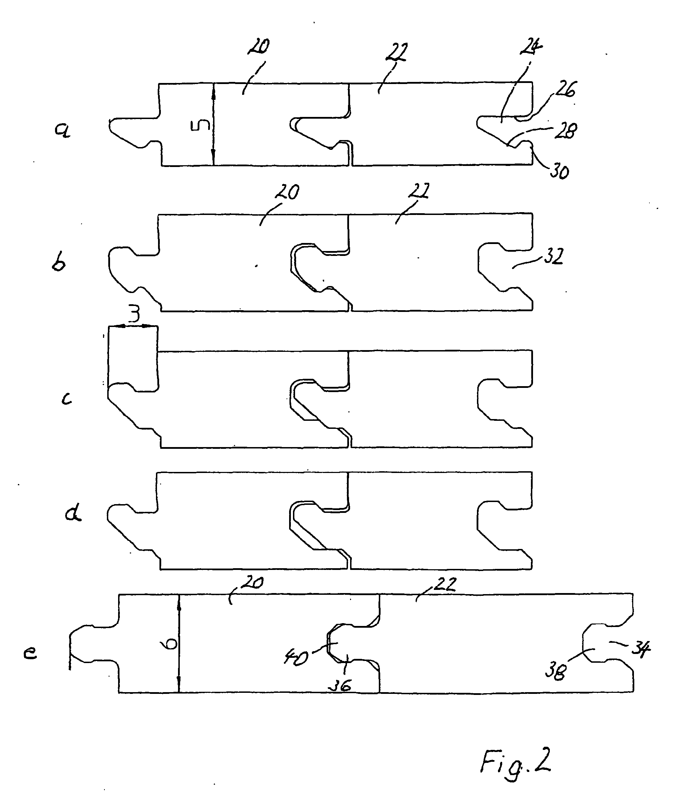

Fig. 2 zeigt verschiedene Ausführungsbeispiele für das zu verwendende Randprofil, das eine Verriegelung benachbarter Platten ermöglicht.

Fig. 2a zeigt zwei benachbarte Platten 20.22 mit verriegelbarer Nut-Feder-Verbindung. Die Nut 24 weist an der jeweils rechten Seite der Paneele in Fig. 2a eine gerade eintretende Flanke 26 auf, die parallel zur Paneelebene verläuft. Die andere Flanke 28 nähert sich in Richtung der Tiefe der Nut 24 der gegenüberliegenden Flanke 26 und weist an ihrem offenen Ende ein nach innen in Richtung der gegenüberliegenden Flanke 26 gerichteten Vorsprung 30 auf. Diese Art der Nut-Feder-Verbindung ist somit teilweise hinterschnitten. Sie kann aber mit einem Klick-Effekt zusammengedrückt werden, zumal das Material insgesamt relativ elastisch ist und sich daher ausreichend verformt, wenn zwei Paneele miteinander verbunden werden sollen. Das Profil gem. Fig. 2a ist ein typisches Einschlagprofil.

Die Ausführungsformen gemäß Fig. 2b, 2c und 2d sind untereinander ähnlich. Sie weisen wiederum eine leicht hinterschnittene Nut 32 auf, die insgesamt eine in das Innere des Materials der Paneele 20,22 hinein ansteigende Richtung sowie einen erweiterten Kopfbereich 34 am Nutgrund aufweist. Nut-Feder-Verbindungen dieser Art können insbesondere "eingewinkelt" werden, wenn zwei Paneele miteinander verbunden werden sollen. Man spricht bei Profilen dieser Art von "Einwinkel-Profilen". Ein neu hinzukommendes Paneel wird zunächst leicht angewinkelt und, nachdem die nicht bezeichnete Feder des neuen Paneels in die Nut hineingedrückt worden ist, in die flache Position abgesenkt. Auf diese Weise können die benachbarten Paneele unter Überwindung der Hinterschneidungen der Nut-Feder-Verbindungen relativ leicht und mit geringer Kraft montiert werden.

Fig. 2e zeigt ein weiteres Einschlagprofil, nämlich eine Ausführungsform mit einer Nut 34 und einer Feder 36, die einer Nut-Feder-Verbindung nahestehen, jedoch einen erweiterten Kopfbereich 38.40 besitzen. Angesichts der Erweiterung des Kopfbereiches müssen benachbarte Paneele mit gewissem Druck zusammengefügt werden. Das elastische Material der Paneele läßt das Einrasten der Federn in den Nuten ohne weiteres zu.

## Patentansprüche

1. Bodenpaneel in der Form eines mehrschichtigen, rechteckigen Laminats mit einem weichen Kern (10) aus Kunststoff, einer Dekorfolie (12) auf der Oberseite des Kerns, einer auf die Dekorfolie (12) aufgebrachten transparenten Verschleißschicht (14) und einer auf der Verschleißschicht angebrachten transparenten Lackschicht (16) sowie einer Gegenzugschicht (18) auf der Rückseite des Kerns (10), mit einer veriegelbaren Nut-Feder-Verbindung an wenigstens zwei einander gegenüberliegenden Rändern der Paneele (20, 22),
**dadurch gekennzeichnet, dass**
der Kern (10) des Bodenpaneels aus weichem PVC besteht,
die Dekorfolie auf der Oberseite des Kerns (10) eine PVC-Folie ist, die mit einem Dekor bedruckt ist,
die Verschleißschicht (14) und die Gegenzugschicht (18) aus PVC sind, die Gegenzugschicht zugleich die Funktion einer Dämpfungsschicht ausübt,
das Bodenpaneel eine Stärke von 4-8 mm aufweist.

2. Bodenpaneel nach Anspruch 1, **dadurch gekennzeichnet, dass** die Lackschicht (16) UV-härtbar ist.

3. Bodenpaneel nach Anspruch 1, **dadurch gekennzeichnet, dass** die Paneele ein Flächengewicht von 1,5 bis 2,0 kg pro Quadratmeter pro mm Stärke aufweisen.

4. Bodenpaneel nach einem der vorhergehenden Ansprüche, **dadurch gekennzeichnet, dass** die einzelnen Lagen des Laminats durch Thermokaschieren miteinander verbunden sind.

## Claims

1. Floor panel in the form of a multi layer, rectangular laminate with a soft core (10) of plastic, a decor film (12) on the upper side of the core (10), a transparent finishing layer (14) and a transparent lacquer layer (16) applied on the finishing layer as well as back-pull layer (18) on the back of the core (10), having a lockable groove and tongue connection at at least two opposite edges of the panel (20,22),
**characterized in that**
the core (10) of the floor panel is made of soft PVC,
the decor foil on the upper side of the core (10) is a PVC foil being printed with a decor,
the finishing layer (14) and the back-pull layer is made of PVC, the back-pull layer carrying out at the same time the function of a damping layer,
the floor panel has thickness of 4 to 8 mm.

2. Floor panel as claimed in claim 1, **characterized in that** the lacquer layer (16) is UV curable.

3. Floor panel as claimed in claim 1, **characterized in that** the floor panels have a weight per unit area of 1,5 to 2,0 kg per square meter per millimeter of thickness.

4. Floor panel as claimed in one of the preceding claims, **characterized in that** the individual layers of the laminate are bonded to one another by lamination at an elevated temperature.

## Revendications

1. Panneau de sol ayant la forme d'un stratifié rectangulaire à plusieurs couches, comportant un noyau mou (10) en matière plastique, un film décoratif (12) sur la face supérieure du noyau, une couche de résistance à l'usure (14) transparente appliquée sur le film décoratif (12) et une couche de vernis (16) transparente appliquée sur la couche de résistance à l'usure (14) ainsi qu'une couche anti-traction (18) sur la face arrière du noyau (10), comportant un assemblage à languette et rainure pouvant être bloqué sur au moins deux bords mutuellement opposés des panneaux (20, 22),
**caractérisé en ce que**
le noyau (10) du panneau de sol est constitué de PVC mou,
le film décoratif sur la face supérieure du noyau (10) est un film en PVC sur lequel est imprimé un décor,
la couche de résistance à l'usure (14) et la couche anti-traction est en PVC et la couche anti-traction remplit simultanément la fonction d'une couche d'amortissement,
le panneau de sol a une épaisseur de 4 à 8 mm..

2. Panneau de sol selon la revendication 1, **caractérisé en ce que** la couche de vernis (16) peut être durcie par les UV.

3. Panneau de sol selon la revendication 1, **caractérisé en ce que** les panneaux ont un poids par surface unitaire de 1,5 à 2,0 kg par mètre carré par mm d'épaisseur.

4. Panneau de sol selon l'une des revendications précédentes, **caractérisé en ce que** les couches individuelles du stratifié sont reliées les unes aux autres par un laminage à température élevée.
